# EUROPÄISCHE PATENTSCHRIFT

(11) **EP 3 251 484 B1**
(45) Veröffentlichungstag und Bekanntmachung des Hinweises auf die Patenterteilung: **26.09.2018**
(21) Anmeldenummer: 16172934.8
(22) Anmeldetag: 03.06.2016
(51) Int. Cl.: A01B 69/00

(54) **VERFAHREN UND VORRICHTUNG ZUM BETREIBEN EINER LANDWIRTSCHAFTLICHEN MASCHINE**
METHOD AND DEVICE FOR OPERATING AN AGRICULTURAL MACHINE
PROCEDE ET DISPOSITIF DESTINES AU FONCTIONNEMENT D'UNE MACHINE AGRICOLE

(43) Veröffentlichungstag der Anmeldung: 06.12.2017
(73) Patentinhaber: Kverneland Group Kerteminde A/S, 5300 Kerteminde (DK)
(72) Erfinder: Pauli, Marco, 78256 Steißlingen (DE); Leute, Manuel, 78166 Donaueschingen (DE)
(74) Vertreter: Grünecker Patent- und Rechtsanwälte PartG mbB

(56) Entgegenhaltungen:
- EP-A1- 1 616 470
- EP-A1- 2 342 963
- EP-B1- 2 547 188
- US-A- 5 077 653

## Beschreibung

Die Erfindung betrifft ein Verfahren zum Betreiben einer landwirtschaftlichen Maschine mit den Merkmalen des Oberbegriffs von Anspruch 1, eine landwirtschaftliche Maschine mit den Merkmalen des Oberbegriffs von Anspruch 13 und eine Maschinensteuerung für eine landwirtschaftliche Maschine mit den Merkmalen des Oberbegriffs von Anspruch 14.

Bei der Futterernte ist es üblich, das Erntegut (beispielsweise Gras) mithilfe einer landwirtschaftlichen Maschine durch eine Arbeitsgerätekombination in Form eines Mähwerks und/oder Schwaders zu bearbeiten. Dabei wird das Erntegut zunächst abgemäht und dann vom Schwader als Schwad auf der landwirtschaftlichen Nutzfläche abgelegt, bevor es beispielsweise mit einem Ladewagen aufgenommen und abtransportiert wird. Üblicherweise wird dazu die landwirtschaftliche Maschine bestehend aus einem Zugfahrzeug und einer damit verbundenen Arbeitsgerätekombination in Form des Mähwerks oder Schwaders eingesetzt, die einen Tragrahmen mit mehreren davon quer zur Fahrtrichtung abstehend oder am Zugfahrzeug front- oder heckseitig angeordneten Arbeitsgeräten umfasst. Derartige Arbeitsgeräte können beispielsweise Mähbalken und/oder Rechkreisel sein. Beispielsweise werden die Rechkreisel jeweils aus einem Kreiselkopf und mehreren daran umfänglich angeordneten Zinkenarmen gebildet, von deren Enden jeweils mehrere Zinken zum Boden hin abstehen. Durch die Drehbewegung der Rechkreisel wird das auf der landwirtschaftlichen Nutzfläche verteilte Erntegut zum Schwad zusammengerecht.

Üblicherweise sind bei derartigen Arbeitsgerätekombinationen die Arbeitsgeräte jeweils unabhängig voneinander anhebbar und absenkbar, um sie entweder in eine Vorgewendestellung oder in Eingriff mit dem Erntegut zu bringen. Dadurch ist es möglich, die Arbeitsgeräte entweder zur Bearbeitung abzusenken oder in einem bereits bearbeiteten Feldbereich, beispielsweise im Vorgewende, in die Vorgewendestellung anzuheben, so dass der dort bereits abgelegte Schwad nicht beeinträchtigt wird.

Beispielsweise ist aus der EP 2 547 188 B1 eine Heuerntevorrichtung bekannt, bei der zwei Ernteverarbeitungswerkzeuge automatisch in Abhängigkeit von der Vorrichtungsgeschwindigkeit sowie eines Winkels zwischen der Fahrtrichtung und einer Grenzlinie in die Vorgewendestellung oder in Eingriff mit dem Erntegut gebracht werden. Die Grenzlinie wird entweder mit einer Kamera erkannt oder der Feldkarte eines GPS-Systems entnommen.

Nachteilig bei der bekannten Vorrichtung ist, dass die reale Situation auf der landwirtschaftlichen Nutzfläche nicht immer genau genug mit der vorhandenen Feldkarte des GPS-Systems übereinstimmt. Dadurch kommt es zu einer ungenauen Bearbeitung und zu entsprechenden Ernteausfällen.

Aufgabe der vorliegenden Erfindung ist es daher, ein Verfahren und eine Vorrichtung zum Betreiben einer landwirtschaftlichen Maschine mit einem Zugfahrzeug und einer mit dem Zugfahrzeug verbundenen Arbeitsgerätekombination in Form eines Mähwerks und/oder Schwaders bereitzustellen, bei dem es zu geringeren Ernteverlusten kommt.

Zur Lösung dieser Aufgabenstellung stellt die Erfindung ein Verfahren zum Betreiben einer landwirtschaftlichen Maschine mit den Merkmalen des Anspruchs 1 bereit.

Vorteilhafte Ausführungsformen der Erfindung sind in den Unteransprüchen genannt.

Dadurch, dass beim Bearbeiten mit einem vorzugsweise satellitengestützten Navigationssystem laufend Positionsdaten der Arbeitsgerätekombination erfasst werden, ist der auf der landwirtschaftlichen Nutzfläche bei der Bearbeitung zurückgelegte Weg bekannt. Da zudem die Anordnung der Arbeitsgeräte als Arbeitsgerätekombination am Zugfahrzeug a priori bekannt ist, kann aus den Positionsdaten der bereits bearbeitete Feldbereich ermittelt und aufgezeichnet werden. Folglich wird der bearbeitete Feldbereich beim laufenden Betrieb der Arbeitsgerätekombination besonders genau und unabhängig von vorhandenem Kartenmaterial ermittelt.

Dadurch, dass die Arbeitsgeräte jeweils unabhängig voneinander auf Basis ihrer Positionen beim Wiedererreichen des wenigstens einen bereits bearbeiteten Feldbereichs und/oder beim Einfahren aus dem bereits bearbeiteten Feldbereich in einen noch zu bearbeitenden Feldbereich automatisch angehoben bzw. abgesenkt werden, erfolgt das Bearbeiten des Ernteguts besonders präzise. Darüber hinaus werden im bereits bearbeiteten Feldbereich bearbeitete Flächen nicht erneut bearbeitet und dadurch beeinträchtigt. Folglich kommt es zu geringeren Ernteverlusten bei der Bearbeitung der landwirtschaftlichen Nutzfläche.

Das Verfahren kann in einer Maschinensteuerung für die landwirtschaftliche Maschine als Computerprogramm ablaufen.

Das Zugfahrzeug kann ein Traktor oder ein Schlepper sein. Üblicherweise umfasst das Zugfahrzeug einen Fahrzeugrahmen, an dem ein Motor mit einem Getriebe angeordnet ist, durch das mehrere Räder zur Fortbewegung der Arbeitsgerätekombination angetrieben werden. Weiter kann das Zugfahrzeug eine Kabine für eine Bedienperson aufweisen, in der mehrere Bedienelemente zum Steuern des Zugfahrzeugs und/oder der Arbeitsgerätekombination angeordnet sind. Zusätzlich kann das Zugfahrzeug gelenkte Räder aufweisen, die vorzugsweise manuell mit einem Lenkrad in der Kabine und/oder automatisch mittels der Maschinensteuerung lenkbar sind. Die Maschinensteuerung kann im Zugfahrzeug angeordnet sein. Darüber hinaus kann das Zugfahrzeug eine Anhängevorrichtung zum Anhängen einer rückseitigen Arbeitsgerätekombination sowie eine Zapfwelle zur Übertragung einer Antriebskraft auf die Arbeitsgerätekombination aufweisen. Beispielsweise können mit der Antriebskraft die Arbeitsgeräte in eine Drehbewegung zum Bearbeiten des Ernteguts gebracht werden, beispielsweise zum Zusammenrechen mittels Rechkreisel oder zum Mähen mit Mähscheiben. Ferner kann das Zugfahrzeug Steuerleitungen zur Arbeitsgerätekombination hin aufweisen, um die Arbeitsgeräte anzuheben und/oder abzusenken.

Die Fahrtrichtung der Arbeitsgerätekombination kann diejenige Richtung sein, in der die Arbeitsgerätekombination vom Zugfahrzeug beim Bearbeiten bewegt wird. Dass die Arbeitsgerätekombination mit dem Zugfahrzeug "verbunden" ist, kann hier bedeuten, dass die Arbeitsgerätekombination am Zugfahrzeug angehängt ist. Ebenso kann dies bedeuten, dass die Arbeitsgerätekombination vorne, hinten und/oder seitlich über die Anhängevorrichtung mit dem Zugfahrzeug verbunden ist.

Die Arbeitsgerätekombination kann ein Mähwerk zum Mähen und/oder ein Schwader zum Zusammenrechen des Ernteguts sein bzw. umfassen. Die Arbeitsgeräte können Mähscheiben, Mähbalken an denen vorzugsweise Mähscheiben angeordnet sind und/oder Rechkreisel sein bzw. umfassen. Mit "Bearbeiten des Ernteguts" kann hier das Mähen und/oder Zusammenrechen des Ernteguts gemeint sein.

Die Arbeitsgerätekombination in Form eines Mähwerks kann als Arbeitsgeräte ein Seiten-, Front- und/oder Heckmähwerk umfassen. Bei dem Seiten-, Front- und/oder Heckmähwerk kann es sich jeweils um einen Mähbalken handeln, der frontal, seitlich bzw. heckseitig von dem Zugfahrzeug abstehen. Bei einem Seitenmähwerk können zwei Mähbalken seitlich vom Zugfahrzeug abstehend angeordnet sein. Die Mähscheiben können sich zum Mähen des Ernteguts um ihre jeweilige Achse drehen und/oder umfänglich angeordnete Schneiden aufweisen. Der Tragrahmen des Mähwerks kann vorne, seitlich und/oder hinten am Zugfahrzeug angeordnet sein, vorzugsweise über die Anhängevorrichtung. Der Tragrahmen kann aus mehreren separaten Einheiten bestehen, die jeweils über einzelne Anhängevorrichtungen vorne, seitlich und/oder hinten am Zugfahrzeug angeordnet sind und die über das Zugfahrzeug miteinander verbunden sind. Das Mähwerk kann zusätzlich Schwadvorrichtungen aufweisen, um das Erntegut direkt nach dem Mähen mit den Mähscheiben in einem Schwad auf der landwirtschaftlichen Nutzfläche abzulegen.

An dem Schwader können mehrere Rechkreisel paarweise angeordnet sein, wobei sich die Rechkreisel in einem Paar entgegengesetzt drehen, sodass das Erntegut zwischen beiden als Schwad abgelegt oder einem nachfolgenden, engeren Paar Rechkreisel kaskadenartig zugeführt wird. Beispielsweise kann am Tragrahmen ein erstes Paar Rechkreisel mit einer breiteren Spannweite angeordnet sein, das das Erntegut einem nachfolgenden zweiten Paar Rechkreisel mit einer geringeren Spannweite zuführt. Das zweite Paar Rechkreisel legt dann das Erntegut in einem Schwad auf der landwirtschaftlichen Nutzfläche ab. Die Rechkreisel können jeweils einen drehbaren Kreiselkopf mit umfänglich angeordneten Zinkenarmen umfassen, von deren äußeren Enden bei der Bearbeitung jeweils mehrere Zinken zum Boden hin abstehen und mit dem Erntegut in Eingriff stehen. Denkbar ist auch, dass am Schwader weitere Rechkreisel angeordnet sind, die nicht automatisch angehoben oder abgesenkt werden. Der Tragrahmen kann sich beim Schwader im Wesentlichen längs zur Fahrtrichtung erstrecken und/oder mit Rädern auf der landwirtschaftlichen Nutzfläche abgestützt sein.

Die Arbeitsgerätekombination kann den Tragrahmen umfassen, an dem die Arbeitsgeräte quer zur Fahrtrichtung abstehend angeordnet sind. Dass "die Arbeitsgeräte von dem Tragrahmen quer zur Fahrtrichtung der Arbeitsgerätekombination abstehend angeordnet sind" kann bei einem Front-, Seiten- und/oder Heckmähwerk bedeuten, dass ein Mähbalken quer zur Fahrtrichtung angeordnet ist. Zum Anheben und Absenken können die Arbeitsgeräte über verfahr- und/oder schwenkbare Arme mit dem Tragrahmen verbunden sein. Denkbar ist, dass die Arbeitsgeräte zusätzlich zum An- und Abheben auch im Abstand zum Tragrahmen quer verfahrbar sind, um beispielsweise die Arbeitsbreite der Arbeitsgerätekombination einzustellen. Vorzugsweise sind dazu längenverstellbare Arme am Tragrahmen vorgesehen. Vorzugsweise können die Arme über Hydraulikantriebe verstellbar sein. Die Arme können jeweils im Wesentlichen in Fahrtrichtung quer zum Tragrahmen abstehend angeordnet sein. Die Arbeitsgerätekombination kann über Steuerleitungen, beispielsweise Hydraulikleitungen, mit dem Zugfahrzeug verbunden sein, um die Arbeitsgeräte zum Beispiel mit Hilfe von Hydraulikzylindern anzuheben bzw. abzusenken. Dass die "Arbeitsgeräte jeweils unabhängig voneinander angehoben und abgesenkt werden können" kann hier bedeuten, dass die Bewegung der Arbeitsgeräte mittels der schwenkbaren Arme durch Steuerleitungen vom Zugfahrzeug und/oder von der Maschinensteuerung aus jeweils einzeln angehoben und abgesenkt werden können.

In der Vorgewendestellung ist das jeweilige Arbeitsgerät so weit nach oben verfahren, dass die Mähscheiben des Mähwerks bzw. die Zinken der Rechkreisel nicht in Eingriff mit dem Erntegut stehen. Die "Vorgewendestellung" kann eine angehobene Stellung der Arbeitsgeräte sein, die im sogenannten Vorgewende eingenommen wird und bei der die Arbeitsgerätekombination bei der Bearbeitung der landwirtschaftlichen Nutzfläche gewendet wird. Umgekehrt können die Arbeitsgeräte beim Eingriff mit dem Erntegut in eine Arbeitsstellung abgesenkt sein, insbesondere wobei die Mähscheiben des Mähwerks und/oder der Mähbalken des Mähwerks und/oder die Zinken der Rechkreisel wenigstens teilweise in Eingriff mit dem Erntegut stehen und/oder Rotationsachsen der Arbeitsgeräte im Wesentlichen senkrecht zum Boden stehen.

Das Navigationssystem kann satellitengestützt, vorzugsweise als GPS-System ausgebildet sein. Dadurch kann die Position der Arbeitsgerätekombination besonders einfach und genau erfasst werden. Das Navigationssystem kann über eine Datenschnittstelle mit der Maschinensteuerung zur Übermittlung der Positionsdaten verbunden sein. Die Positionsdaten können eine Liste von Positionen der Arbeitsgerätekombination auf der landwirtschaftlichen Nutzfläche umfassen, die bei der Bearbeitung des bearbeiteten Feldbereichs abgefahren wurden. Die Positionen können jeweils Koordinaten oder Vektoren sein. Das satellitengestützte Navigationssystem kann vorzugsweise am Zugfahrzeug angeordnet sein und zur Berechnung der Positionsdaten der Arbeitsgerätekombination mit der Maschinensteuerung verbunden sein. Der bereits bearbeitete Feldbereich kann der Teil der landwirtschaftlichen Nutzfläche sein, auf dem das Erntegut bereits von der Arbeitsgerätekombination in einem Schwad oder mehreren Schwaden abgelegt wurde.

Zur Ermittlung des wenigstens einen bearbeiteten Feldbereichs aus den laufend erfassten Positionsdaten des Navigationssystems kann ein zurückgelegter Fahrtweg der Arbeitsgerätekombination bestimmt werden. Beispielsweise können die Positionsdaten zu einer Kurve zusammengefügt werden, die dem zurückgelegten Fahrtweg auf der landwirtschaftlichen Nutzfläche entspricht.

Mit "Positionen der Arbeitsgeräte" kann deren jeweilige Position auf der landwirtschaftlichen Nutzfläche und/oder gegenüber dem bereits bearbeiteten Feldbereich und/oder gegenüber dem noch zu bearbeitenden Feldbereich gemeint sein. Die jeweilige Position eines Arbeitsgeräts kann mit dem Navigationssystem ermittelt werden, wobei dazu vorzugsweise die relative Position des Arbeitsgeräts gegenüber dem Navigationssystems, einem Referenzpunkt an der Arbeitsgerätekombination und/oder dem Zugfahrzeug berücksichtigt wird. Die Positionen der Arbeitsgeräte und/oder der Referenzpunkt an der Arbeitsgerätekombination bzw. am Zugfahrzeug können jeweils als Koordinate oder Vektor hinterlegt sein, vorzugsweise in der Maschinensteuerung.

Vor dem Bearbeiten kann eine Arbeitsbreite vorzugsweise von einer Bedienperson festgelegt werden, auf deren Basis ein Abstand von wenigstens einem der Arbeitsgeräte gegenüber dem Tragrahmen und / oder des Front-, Seiten- und/oder Heckmähwerks gegenüber dem Zugfahrzeug eingestellt wird, wobei aus der Arbeitsbreite und dem zurückgelegten Fahrtweg der wenigstens eine bereits bearbeitete Feldbereich ermittelt wird. Dadurch wird der bereits bearbeitete Feldbereich besonders einfach auf Basis der Positionsdaten und der eingestellten Arbeitsbreite ermittelt, ohne dass eine Feldkarte benötigt wird. Denkbar ist auch, dass die Arbeitsbreite durch ein Assistenzsystem vorgegeben wird. Die Arbeitsbreite kann dem Abstand des quer zur Fahrtrichtung am breitesten eingestellten Arbeitsgerätepaars, insbesondere dem weitesten Abstand zweier Mähbalken oder Rechkreiselpaars entsprechen. Anders ausgedrückt kann die Arbeitsbreite die Breite sein, mit der das Erntegut in einem Durchlauf quer zur Fahrtrichtung von der Arbeitsgerätekombination bearbeitet wird. Zur Berechnung des bereits bearbeiteten Feldbereichs kann die Arbeitsbreite entlang des zurückgelegten Fahrtweg integriert bzw. aufsummiert werden. Üblicherweise steht dabei die Arbeitsbreite senkrecht auf der Fahrtrichtung und damit dem zurückgelegten Fahrtweg.

Beim Bearbeiten kann zunächst ein außenliegender Feldbereich bearbeitet werden, der den bereits bearbeiteten Feldbereich bildet und anschließend kann ein vom außenliegenden Feldbereich wenigstens teilweise umschlossener innerer Feldbereich bearbeitet werden, der den noch zu bearbeitenden Feldbereich bildet. Dadurch wird mit dem außen liegenden Feldbereich das Vorgewende gebildet, in dem die landwirtschaftliche Maschine besonders einfach wenden kann. Anders ausgedrückt kann der außenliegende Feldbereich das Vorgewende umfassen. Der innere Feldbereich kann von dem außen liegenden Feldbereich teilweise oder vollständig umschlossen sein. Vorzugsweise kann der innere Feldbereich dann in zueinander parallelen Arbeitsgassen abgefahren werden. Dadurch ist die Feldbearbeitung besonders effizient.

Beim Erreichen einer zur Fahrtrichtung senkrechten Bearbeitungsgrenze können im Falle einer Arbeitsgerätekombination in Form eines Schwaders zwei paarweise gegenüberliegend am Tragrahmen angeordnete Rechkreisel gleichzeitig automatisch angehoben oder abgesenkt werden. Anders ausgedrückt erreichen so die zwei paarweise gegenüberliegend am Tragrahmen angeordneten Rechkreisel die Bearbeitungsgrenze gleichzeitig und werden gleichzeitig angehoben oder abgesenkt. Im Falle einer Arbeitsgerätekombination in Form eines Mähwerks können beim Erreichen einer zur Fahrtrichtung senkrechten Bearbeitungsgrenze zwei paarweise gegenüberliegend an jeweiligen Tragrahmen angeordnete Mähbalken oder ein seitlicher Mähbalken in Kombination mit einem heck- oder frontseitigen Mähbalken gleichzeitig automatisch angehoben oder abgesenkt werden. Anders ausgedrückt erreichen so die zwei paarweise gegenüberliegend jeweils am Tragrahmen angeordneten Mähbalken oder ein seitlicher Mähbalken in Kombination mit einem heck- oder frontseitigen Mähbalken die Bearbeitungsgrenze gleichzeitig und werden gleichzeitig angehoben oder abgesenkt. Die Bearbeitungsgrenze kann eine Grenze zwischen einem gerade zu bearbeitenden Feldbereich und dem bereits bearbeiteten Feldbereich sein.

Anders ausgedrückt kann in Fahrtrichtung unmittelbar vor der Arbeitsgerätekombination ein noch zu bearbeitenden Feldbereich sein, auf den dann der bereits bearbeitete Feldbereich folgt. Zwischen beiden wird die Bearbeitungsgrenze gebildet.

Beim Erreichen einer zur Fahrtrichtung schrägen Bearbeitungsgrenze können zwei paarweise gegenüberliegend am Tragrahmen angeordnete Arbeitsgeräte auf Basis einer Berechnung von Positionsangaben der Arbeitsgeräte gegenüber der Bearbeitungsgrenze automatisch angehoben oder abgesenkt werden, insbesondere wobei zunächst das zur Bearbeitungsgrenze näher liegende Arbeitsgerät angehoben oder abgesenkt wird und danach das zur Bearbeitungsgrenze entfernter liegende Arbeitsgerät. Dadurch wird das Bearbeitungsverhalten der Arbeitsgerätekombination an die schräge Bearbeitungsgrenze angepasst und die landwirtschaftliche Fläche besonders präzise bearbeitet.

Beim Erreichen einer zur Fahrtrichtung schrägen Bearbeitungsgrenze können im Falle eines Schwaders zwei paarweise gegenüberliegend am Tragrahmen angeordnete Rechkreisel auf Basis einer Berechnung von Positionsangaben der Rechkreisel gegenüber der Bearbeitungsgrenze automatisch angehoben oder abgesenkt werden, insbesondere wobei zunächst das zur Bearbeitungsgrenze näher liegende Rechkreisel angehoben oder abgesenkt wird und danach der zur Bearbeitungsgrenze entfernter liegende Rechkreisel. Dadurch wird das Rechverhalten des Schwaders an die schräge Bearbeitungsgrenze angepasst und die landwirtschaftliche Fläche besonders präzise bearbeitet.

Im Falle einer Mähwerkskombination können beim Erreichen einer zur Fahrtrichtung schrägen Bearbeitungsgrenze zwei paarweise gegenüberliegend und jeweils am Tragrahmen angeordnete Mähbalken oder ein seitlicher Mähbalken in Kombination mit einem heck- oder frontseitigen Mähbalken auf Basis einer Berechnung von Positionsangaben der Mähbalken gegenüber der Bearbeitungsgrenze automatisch angehoben oder abgesenkt werden, insbesondere wobei zunächst der zur Bearbeitungsgrenze näher liegende Mähbalken angehoben oder abgesenkt wird und danach der zur Bearbeitungsgrenze entfernter liegende Mähbalken. Dadurch wird das Arbeitsergebnis an die schräge Bearbeitungsgrenze angepasst und die landwirtschaftliche Fläche besonders präzise bearbeitet.

Vorzugsweise erfolgt das automatische Anheben und Absenken der Arbeitsgeräte eines Paars bei Erreichen der schrägen Bearbeitungsgrenze versetzt. Denkbar ist auch, dass im Falle eines Schwaders ein weiteres Paar Rechkreiselam Tragrahmen nachfolgen angeordnet ist und ebenfalls nach der zuvor beschriebenen Prozedur angehoben oder abgesenkt wird.

Die Positionsangaben können für die Arbeitsgeräte jeweils eine Koordinate und/oder einen Vektor umfassen, der die Position des Arbeitsgeräts an der Arbeitsgerätekombination in der Arbeitsstellung repräsentiert. Die Koordinate und/oder der Vektor können gegenüber einem Koordinatensystem und/oder Vektorraum am Zugfahrzeug oder an der Arbeitsgerätekombination vorgegeben sein. Die Positionsangaben können auch auf Basis einer aktuellen Maschinenstellung des Zugfahrzeugs und/oder der Arbeitsgerätekombination dynamisch berechnet werden. Beispielsweise wenn die Arbeitsgerätekombination bei einer Kurvenfahrt nicht mit dem Zugfahrzeug fluchtet sondern einen Winkel einnimmt. Dadurch können die Arbeitsgeräte auch bei einer Kurvenfahrt gegenüber der Bearbeitungsgrenze exakt angehoben und abgesenkt werden.

Das Erntegut kann in einer Ausführungsform mit wenigstens vier als Rechkreisel ausgebildeten Arbeitsgeräten zusammengerecht werden, die paarweise gegenüberliegend am Tragrahmen angeordnet sind, wobei ein erstes Paar Rechkreisel gegenüber einem zweiten Paar Rechkreisel in Fahrtrichtung weiter vorne am Tragrahmen angeordnet ist, vorzugsweise wobei das erste Paar Rechkreisel vom Tragrahmen breiter beabstandet ist als das zweite Paar Rechkreisel. Dadurch kann ein breiterer Feldbereich bearbeitet werden. Beim Wiedererreichen des wenigstens einen bereits bearbeiteten Feldbereichs können dann zunächst wenigstens ein Rechkreisel des ersten Paars und dann wenigstens ein Rechkreisel des zweiten Paars angehoben werden und/oder beim Einfahren in den noch zu bearbeitenden Feldbereich zunächst wenigstens ein Rechkreisel des ersten Paars und dann wenigstens ein Rechkreisel des zweiten Paars abgesenkt werden.

Beim Wiederreichen des bereits bearbeiteten Feldbereichs kann eine erste Distanz berücksichtigt werden, wie weit die Arbeitsgeräte jeweils in den bereits bearbeiteten Feldbereich einfahren können, bevor sie angehoben werden. Dadurch wird ein gewisser Überlapp erzeugt, der bei zwei Bearbeitungsvorgängen überfahren wird. Dies kann in einem Bereich sein, der sich beim ersten Bearbeiten neben dem zugehörigen Schwad befindet. Folglich wird hier weder der bereits abgelegte Schwad beeinträchtigt noch kommt es zu einem Verlust von nicht zusammengerechtem Erntegut.

Beim Einfahren aus dem wenigstens einen bereits bearbeiteten Feldbereich in den noch zu bearbeitenden Feldbereich kann eine zweite Distanz berücksichtigt werden, wie weit sich die Arbeitsgeräte jeweils noch in dem bereits bearbeiteten Feldbereich befinden dürfen und dabei schon abgesenkt werden. Dadurch werden die Arbeitsgeräte noch vor dem Einfahren in den noch zu bearbeitenden Feldbereich abgesenkt, wodurch weniger Erntegut verloren geht. Dadurch wird ebenfalls ein Bearbeitungsüberlapp erzeugt.

Bei der Ermittlung und Aufzeichnung des bearbeiteten Feldbereichs und/oder beim Anheben und/oder Absenken der Arbeitsgeräte können eine Position der Arbeitsgerätekombination und/oder Positionen der jeweiligen Arbeitsgeräte zum Beispiel gegenüber der Antenne des Navigationssystems berücksichtigt werden. Dadurch wird ein Offset zwischen der Arbeitsgerätekombination bzw. der Arbeitsgeräte und dem tatsächlichen Messpunkt des Navigationssystems berücksichtigt und die Feldbearbeitung ist besonders präzise. Denkbar ist auch, dass ein Referenzpunkt an der Arbeitsgerätekombination gegenüber der Antenne des Navigationssystems als Bezugspunkt für die Positionsdaten dient. Ebenso können Position der jeweiligen Arbeitsgeräte gegenüber dem Referenzpunkt an der Arbeitsgerätekombination berücksichtigt werden. Diese sind üblicherweise aus Konstruktionsdaten der Arbeitsgerätekombination bekannt. Dadurch ist die Berechnung der einzelnen Positionen der Arbeitsgeräte besonders genau.

Darüber hinaus stellt die Erfindung eine landwirtschaftliche Maschine mit den Merkmalen des Anspruchs 13 sowie eine Maschinensteuerung mit den Merkmalen des Anspruchs 14 bereit.

Dadurch, dass mit der Maschinensteuerung einerseits die Positionsdaten des Navigationssystems erfasst und daraus der bereits bearbeitete Feldbereich ermittelt und aufgezeichnet werden und andererseits darauf basierend die Arbeitsgeräte beim Wiederreichen des bereits bearbeiteten Feldbereichs bzw. beim Einfahren aus dem wenigstens einen bereits bearbeiteten Feldbereich in einen noch zu bearbeitenden Feldbereich automatisch angehoben bzw. abgesenkt werden, wird die landwirtschaftlichen Nutzfläche besonders genau abgearbeitet. Andererseits wird der bereits im bearbeiteten Feldbereich abgelegte Schwad nicht nochmals bearbeitet bzw. beeinträchtigt. Folglich arbeitet die erfindungsgemäße landwirtschaftliche Maschine besonders effektiv und es geht besonders wenig Erntegut verloren.

Die landwirtschaftliche Maschine, bestehend aus dem Zugfahrzeug und der damit verbundenen Arbeitsgerätekombination und/oder die Maschinensteuerung können jeweils die zuvor in Bezug auf das Verfahren zum Betreiben einer landwirtschaftlichen Maschine beschriebenen Merkmale einzelnen oder in beliebigen Kombinationen umfassen.

Alternativ oder zusätzlich können die landwirtschaftliche Maschine und/oder die Maschinensteuerung dazu ausgebildet sein, das zuvor beschriebene Verfahren zum Betreiben einer landwirtschaftlichen Maschine durchzuführen, vorzugsweise nach einem der Ansprüche 1-12.

Die Maschinensteuerung kann eine CPU, einen Speicher, eine Eingabeeinheit, eine Ausgabeeinheit und/oder Schnittstellen umfassen. Bei den Schnittstellen kann es sich um elektrische, pneumatische und/oder hydraulische Steuerleitungen handeln. Die Maschinensteuerung kann entweder an dem Zugfahrzeug oder an der verbundenen Arbeitsgerätekombination angeordnet sein.

Die zuvor genannten Positionen, Positionsangaben, Kurven, Bearbeitungsgrenzen, die landwirtschaftliche Nutzfläche und/oder die Feldbereiche können wenigstens teilweise als mathematische Repräsentation in einem gemeinsamen Koordinatensystem und/oder Vektorraum der landwirtschaftlichen Maschine oder auch in mehreren Koordinatensystemen und/oder Vektorräumen hinterlegt sein, vorzugsweise in der Maschinensteuerung. Dadurch können die Positionen der Arbeitsgeräte gegenüber der senkrechten Bearbeitungsgrenze, der schrägen Bearbeitungsgrenze, dem bereits bearbeiteten Feldbereich und/oder dem noch zu bearbeitenden Feldbereich besonders einfach zum Beispiel vektoriell berechnet werden.

Weitere Merkmale und Vorteile der Erfindung werden nachfolgend anhand der in den Figuren dargestellten Ausführungsbeispiele näher erläutert. Dabei zeigt:
- Figur 1A - 1B: ein erfindungsgemäßes Ausführungsbeispiel der landwirtschaftlichen Maschine in einer Draufsicht bzw. in einer perspektivischen Ansicht;
- Figur 2: ein erfindungsgemäßes Ausführungsbeispiel des Verfahrens zum Betreiben der landwirtschaftlichen Maschine als Flussdiagramm;
- Figur 3: eine beispielhafte Bearbeitung eines im Wesentlichen rechteckigen Feldes mit dem Verfahren nach der Figur 2;
- Figur 4: eine beispielhafte Bearbeitung eines im Wesentlichen dreieckigen Feldes mit dem Verfahren nach der Figur 2;und
- Figur 5: ein weiteres erfindungsgemäßes Ausführungsbeispiel der landwirtschaftlichen Maschine in einer Draufsicht.

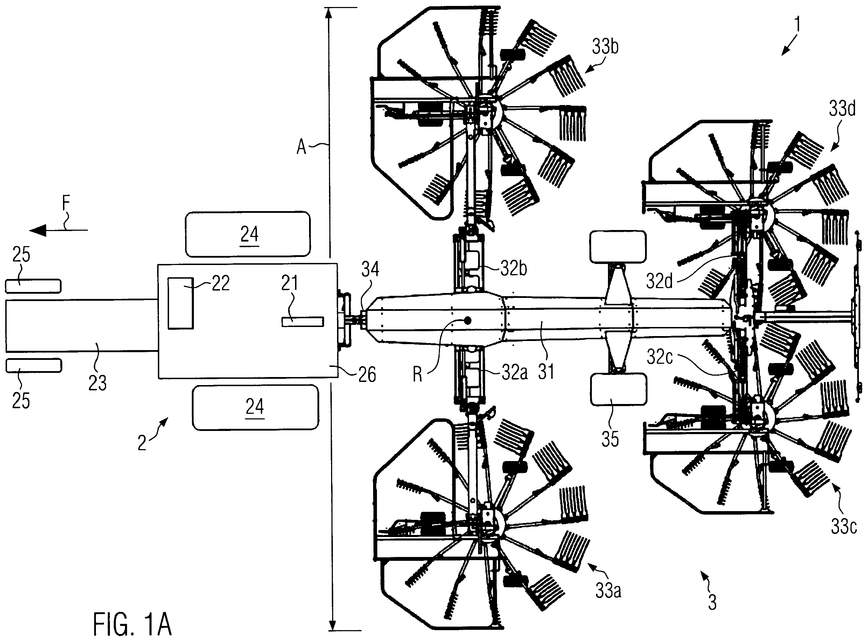

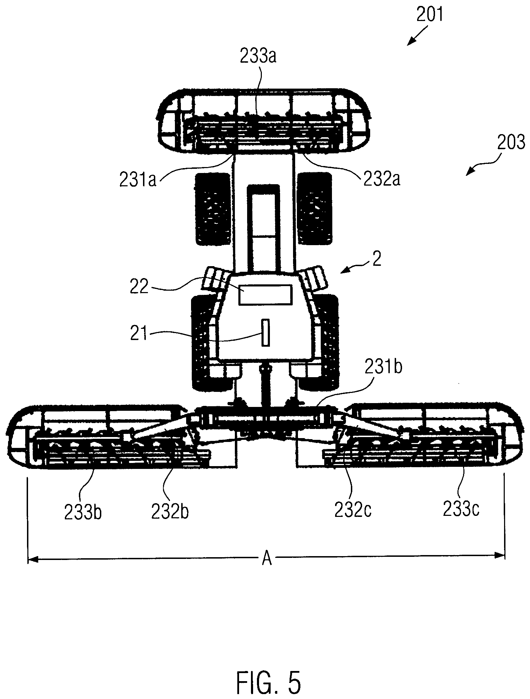

In den nachfolgenden Ausführungsbeispielen der Fig. 1A - 4 beschriebene Merkmale sind beispielhaft für eine Arbeitsgerätekombination in Form eines Schwaders mit den als Rechkreisel 33a - 33d ausgebildeten Arbeitsgeräten ausgeführt. Ebenso kann es sich anstelle des Schwaders 3 um eine Arbeitsgerätekombination in Form eines Mähwerks handeln, das mit Mähbalken und/oder Mähscheiben als Arbeitsgeräte anstelle der Rechkreisel 33a - 33d ausgebildet ist. Die Mähschreiben können am Mähbalken angeordnet sein. Das Mähwerk kann ein Front-, Seiten- und/oder Heckmähwerk umfassen die vorne, seitlich und/oder hinten über eine entsprechende Anhängevorrichtung am Zugfahrzeug 2 angeordnet sind. Es versteht sich daher, dass nachfolgend in Bezug auf die Fig. 1A - 4 beschriebene Merkmale einzeln oder in beliebigen Kombinationen sinngemäß auch für eine Arbeitsgerätekombination in Form eines Mähwerks 203 gelten, das als Ausführungsbeispiel in der Figur 5 dargestellt ist.

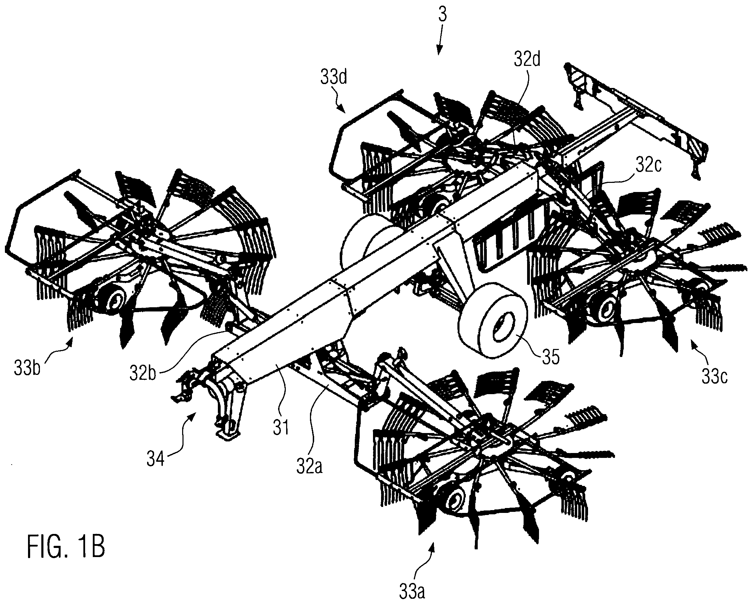

In der Figur 1A ist eine landwirtschaftliche Maschine 1 mit dem Zugfahrzeug 2 und dem angehängten Schwader 3 in einer Draufsicht dargestellt. Eine perspektivische Ansicht des Schwaders 3 ist in der Figur 1B gezeigt.

Zu sehen ist ein üblicherweise als Zugfahrzeug 2 verwendeter Ackerschlepper. Dieser umfasst einen Fahrzeugrahmen 23 mit Motor und Getriebe, zwei dadurch angetriebene Räder 24 und zwei lenkbare Räder 25. In der Kabine 26 kann eine Bedienperson Platz nehmen, um das Zugfahrzeug 2 zu steuern.

Darüber hinaus ist die Maschinensteuerung 22 gezeigt, die mit einer CPU, Speicher, diversen Schnittstellen sowie einer Bedieneinheit und einem Display ausgebildet ist. Die Maschinensteuerung 22 ist über eine Schnittstelle und/oder hier nicht näher dargestellte Steuerleitungen mit dem Schwader 3 verbunden, um die Rechkreisel 33a - 33d unabhängig voneinander automatisch anzuheben oder abzusenken. Ferner ist die Maschinensteuerung 22 auch über eine Datenschnittstelle mit dem Navigationssystem 21 zur Übertragung der Positionsdaten verbunden. Darüber hinaus kann die Bedienperson an der Maschinensteuerung 22 Parameter zur Feldbearbeitung einstellen. Hierzu gehört auch das Einstellen der Arbeitsbreite A des Schwaders 3.

Darüber hinaus ist am Zugfahrzeug 2 das Navigationssystem 21 angeordnet, das hier beispielsweise als GPS-System ausgebildet ist. Dies umfasst eine Antenne auf dem Dach der Kabine 26 des Zugfahrzeugs 2, um einen möglichst guten Satellitenempfang zu ermöglichen. Eine Elektronikeinheit zur Berechnung der Positionsdaten ist ebenfalls Teil des Navigationssystems 21. Damit werden die von der Antenne empfangenen Signale der Satelliten ausgewertet, sodass die Position des Zugfahrzeugs 2 genau berechnet und an die Maschinensteuerung 22 übertragen werden kann.

Der Tragrahmen 31 des Schwaders 3 ist über die Anhängevorrichtung 34 an das Zugfahrzeug 2 angehängt und wird davon gezogen. Darüber hinaus wird der Tragrahmen 31 zwischen dem ersten Paar Rechkreisel 33a, 33b und dem zweiten Paar Rechkreisel 33c, 33d mit den Rädern 35 auf dem Boden abgestützt. Mit der Anhängevorrichtung 34 kombiniert sind der Zapfwellenanschluss zum Übertragen der Antriebskraftkraft, sowie hydraulische, elektrische und/oder pneumatische Anschlüsse. Zu sehen ist weiter, dass die Rechkreisel 33a - 33d jeweils über Arme 32a - 32d mit dem Tragrahmen 31 verbunden sind. Die Arme 32a - 32d können jeweils unabhängig voneinander angehoben und abgesenkt werden. Dazu werden hydraulische oder elektrische Steuersignale vom Zugfahrzeug 2 an entsprechende Aktuatoren, die an den Armen 32a - 32d angebracht sind, übertragen werden, wodurch die Rechkreisel 33a - 33d in die Vorgewendestellung oder in den Eingriff mit dem Erntegut geschwenkt werden können. Beispielsweise sind in der Fig. 1B alle Rechkreisel 33a - 33d im Eingriff mit dem Erntegut dargestellt (sogenannte Arbeitsstellung). Für die Vorgewendestellung werden die Rechkreisel 33a - 33d entsprechend angehoben.

Zudem kann die Arbeitsbreite A an den Rechkreiseln 33a, 33b des ersten Paars (vorderes Paar) getrennt eingestellt werden. Dadurch ist eine asymmetrische Anordnung der Rechkreisel 33a, 33b zum Tragrahmen 31 denkbar. Die Breite der Rechkreisel 33c, 33d des zweiten Paars kann gemeinsam eingestellt werden. Dadurch wird die Schwadbreite verändert. Mit dem ersten Paar Rechkreisel 33a, 33b wird zunächst das Erntegut etwas zur Mitte hin zusammengeschoben und dann von dem nachfolgenden, zweiten Paar 33c, 33d als Schwad abgelegt.

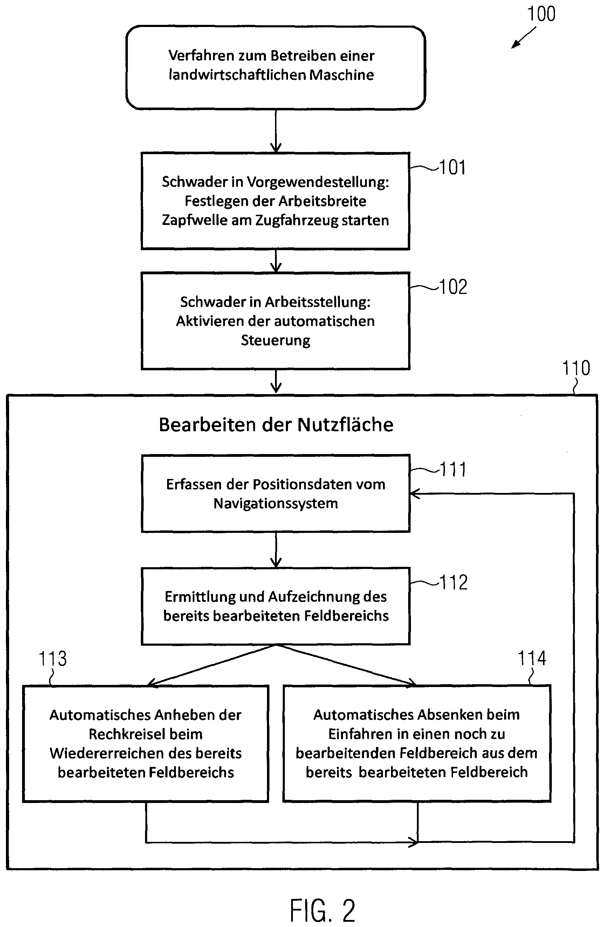

In der Figur 2 ist ein Ausführungsbeispiel eines erfindungsgemäßen Verfahrens zum Betreiben einer landwirtschaftlichen Maschine 100 in einem Flussdiagramm genauer dargestellt.

Die Schritte 101 und 102 dienen zur Vorbereitung der Bearbeitung und sind daher als für die Erfindung optional anzusehen:
Zunächst befindet sich der Schwader 3 im Schritt 101 in der Vorgewendestellung, bei der die Rechkreisel 33a - 33d in die Vorgewendestellung angehoben sind. Von einer Bedienperson oder von einem Assistenzsystem kann dann vor Erreichen der landwirtschaftlichen Nutzfläche die Arbeitsbreite A festgelegt werden. Anschließend wird nun entweder automatisch oder manuell die Zapfwelle am Zugfahrzeug 2 gestartet, so dass die Antriebskraft an den angehängten Schwader 3 übertragen wird. Dadurch rotieren dann die Rechkreisel 33a - 33d.

Anschließend wird der Schwader 3 im Schritt 102 in die Arbeitsstellung gebracht und die automatische Steuerung aktiviert. Beispielsweise mit einer Eingabe der Bedienperson an der Maschinensteuerung 22.

Im Schritt 110 erfolgt dann die Bearbeitung der landwirtschaftlichen Nutzfläche. Dazu wird zunächst ein außenliegender Feldbereich bearbeitet, der entlang der äußeren Grenze der landwirtschaftlichen Nutzfläche als Ganzes oder eines Teilbereichs verläuft. Dabei werden im Schritt 111 laufend Positionsdaten vom Navigationssystem 21 abgerufen und im Schritt 112 zu einem zurückgelegten Fahrtweg des Schwaders 3 verarbeitet. Dadurch ist dann unabhängig von einer Feldkarte die zurückgelegte Wegstrecke im bearbeiteten Feldbereich bekannt. Da die Arbeitsbreite A entsprechend Figur 1A im Wesentlichen senkrecht zur Fahrtrichtung F steht, kann über eine Integration der Arbeitsbreite A über den Fahrtweg der bereits bearbeitete Feldbereich berechnet werden.

Im Schritt 113 werden beim Wiederreichen des bereits bearbeiteten Feldbereichs die Rechkreisel 33a - 33d auf Basis ihrer Positionen automatisch angehoben. Zudem werden im Schritt 114 beim Einfahren in einen noch zu bearbeitenden Feldbereich aus dem bereits bearbeiteten Feldbereich die Rechkreisel 33a - 33d jeweils unabhängig voneinander auf Basis ihrer Positionen automatisch abgesenkt.

Beispielsweise werden die in der Figur 1A gezeigten paarweise am Tragrahmen 31 gegenüberliegend angeordneten, vorderen Rechkreisel 33a, 33b beim Erreichen einer senkrechten Bearbeitungsgrenze gleichzeitig angehoben bzw. abgesenkt. Die zwei hinteren Rechkreisel 33c, 33d, die ebenfalls paarweise gegenüberliegend am Tragrahmen 31 angeordnet sind, werden dann etwas später ebenfalls gleichzeitig angehoben oder abgesenkt.

Demgegenüber werden die Rechkreisel 33a - 33d jeweils beim Erreichen einer zur Fahrtrichtung F schrägen Bearbeitungsgrenze unabhängig voneinander auf Basis einer Berechnung von Positionsangaben der Rechkreisel 33a - 33d gegenüber einer Bearbeitungsgrenze angehoben bzw. abgesenkt. Dazu werden Koordinaten oder Vektoren der Rechkreisel 33a - 33d gegenüber dem in der Figur 1A gezeigten Referenzpunkt R berücksichtigt, die in der Maschinensteuerung 22 hinterlegt sind oder die bei der aktuellen Maschinenstellung dynamisch mit der Maschinensteuerung 22 berechnet werden. Da die Koordinate bzw. der Vektor des Referenzpunkts R gegenüber dem Navigationssystem 21 ebenfalls in der Maschinensteuerung 22 hinterlegt ist oder davon dynamisch berechnet wird, können so die Positionen der Rechkreisel 33a - 33d gegenüber der schrägen Bearbeitungsgrenze genau bestimmt werden. Folglich können die Rechkreisel 33a - 33d jeweils einzeln beim Erreichen der Bearbeitungsgrenze automatisch angehoben oder abgesenkt werden.

Denkbar ist, dass in den Schritten 113,114 beim Wiederreichen des bereits bearbeiteten Feldbereichs eine erste Distanz berücksichtigt wird, wie weit die Rechkreisel 33a - 33d jeweils in den bereits bearbeiteten Feldbereich einfahren können, bevor sie angehoben werden. Alternativ oder zusätzlich kann eine zweite Distanz beim Einfahren aus dem wenigstens einen bereits bearbeiteten Feldbereich in den noch zu bearbeiteten Feldbereich berücksichtigt werden, wie weit sich die Rechkreisel 33a - 33d jeweils noch in dem bereits bearbeiteten Feldbereich befinden dürfen und schon abgesenkt werden.

Die Schritte 111-114 werden in einer Schleife bei der Bearbeitung der landwirtschaftlichen Nutzfläche fortlaufend wiederholt.

Das Verfahren der Figur 2 wird als Computerprogramm in der Maschinensteuerung 22 der Figuren 1A - 1B ausgeführt.

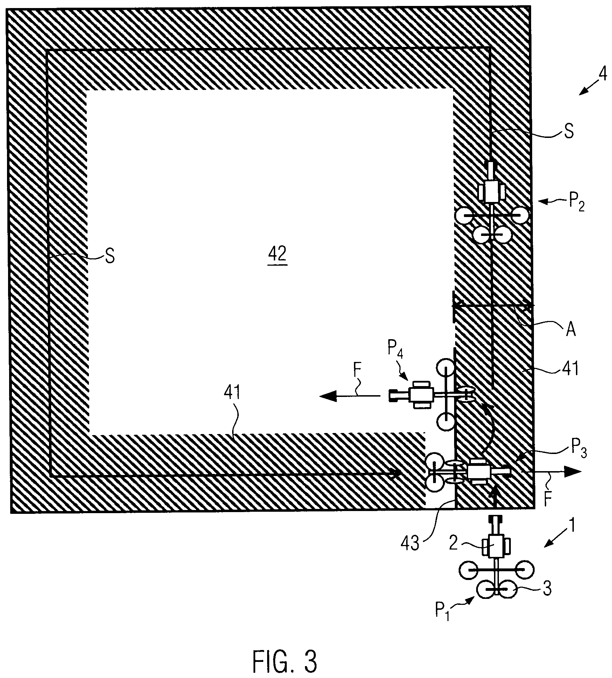

In der Figur 3 ist am Beispiel einer im Wesentlichen rechteckigen landwirtschaftlichen Nutzfläche 4 die Durchführung des Verfahrens aus der Figur 2 mit der landwirtschaftlichen Maschine 1 aus den Figuren 1A-1B gezeigt.

Zu sehen ist, dass die landwirtschaftliche Maschine 1 mit dem Zugfahrzeug 2 und dem Schwader 3 an der Position P₁ vor der Einfahrt in die landwirtschaftliche Nutzfläche 4 steht. Dabei wird der Schwader 3 in die Vorgewendestellung gebracht, die Arbeitsbreite A eingestellt und die Zapfwelle am Zugfahrzeug 2 gestartet. Anschließend wird der Schwader 3 in die Arbeitsstellung gebracht und die automatische Steuerung aktiviert.

Zunächst fährt die landwirtschaftliche Maschine 1 an den vier Feldgrenzen entlang. Die Bearbeitung ist beispielhaft mit der landwirtschaftlichen Maschine 1 an der Position P₂ dargestellt. Dadurch wird der außenliegende Feldbereich zusammengerecht (schraffierter Bereich) und bildet so den bereits bearbeiteten Feldbereich 41. Durch das Navigationssystem werden dabei laufend Positionsdaten des Schwaders 3 erfasst und daraus der zurückgelegte Fahrtweg S bestimmt. Über die Arbeitsbreite A wird dann der bereits bearbeitete Feldbereich 41 ermittelt.

In der Position P₃ ist zu sehen, dass der Schwader 3 den bereits bearbeiteten Feldbereich 41 erneut erreicht. Da die Bearbeitungsgrenze 43 zur Fahrtrichtung F im Wesentlichen senkrecht verläuft, werden zunächst die Rechkreisel des vorderen Paars gleichzeitig angehoben, wobei das hintere Paar noch weiter arbeitet. Anschließend erreicht dann auch das hintere Paar die Bearbeitungsgrenze 43, wobei dann dessen Rechkreisel ebenfalls gleichzeitig angehoben werden.

Anschließend wendet die landwirtschaftliche Maschine 1 in die Position P₄. Da das vordere Paar nun als erstes aus dem bereits bearbeiteten Feldbereich 41 in den noch zu bearbeitenden Feldbereich 42 einfährt, werden dessen Rechkreisel zuerst abgesenkt. Dadurch beginnen sie bereits mit der Bearbeitung des noch zu bearbeitenden Feldbereichs 42, wobei das hintere Paar noch in der Vorgewendestellung steht. Fährt anschließend das hintere Paar Rechkreisel in den noch zu bearbeitenden Feldbereich 42 ein, so werden dessen Rechkreisel auch abgesenkt.

Danach wird der noch zu bearbeitenden Feldbereich 42 in parallelen Feldgassen abgefahren. Das Wenden der landwirtschaftlichen Maschine 1 erfolgt im bereits bearbeiteten Feldbereich 41, also im Vorgewende. Dort werden die einzelnen Rechkreisel mit dem Verfahren der Figur 2 jeweils automatisch angehoben bzw. wieder abgesenkt.

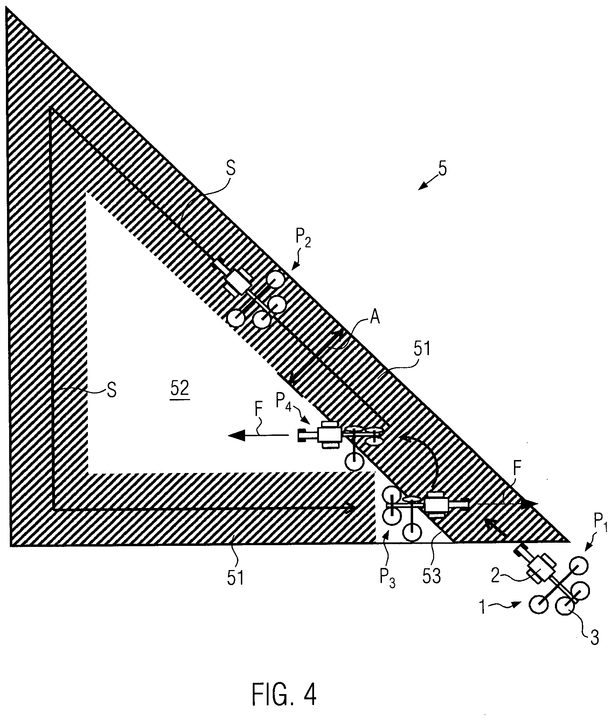

Anhand der Figur 4 ist die Bearbeitung einer im Wesentlichen dreieckigen landwirtschaftlichen Nutzfläche 5 mit dem Verfahren nach der Figur 2 gezeigt. Die Bearbeitung unterscheidet sich im Wesentlichen von der Figur 3 dadurch, dass die Bearbeitungsgrenze 53 durch die dreieckige Form der landwirtschaftlichen Nutzfläche 5 schräg zur Fahrtrichtung F verläuft.

Zunächst befindet sich die landwirtschaftliche Maschine 1 in der Position P₁ in der Vorgewendestellung, wobei die Arbeitsbreite A festgelegt und die Zapfwelle des Zugfahrzeugs 2 gestartet wird. Anschließend beginnt die Bearbeitung entlang der äußeren Feldgrenzen, sodass der schraffierte, außenliegende Feldbereich zusammengerecht wird, der so den bereits bearbeiteten Feldbereich 51 bildet.

Durch das Navigationssystem werden dabei laufend Positionsdaten des Schwaders 3 erfasst und daraus der zurückgelegte Fahrtweg S bestimmt. Über die Arbeitsbreite A wird dann der bereits bearbeitete Feldbereich 51 ermittelt.

Beim Wiedererreichen des bereits bearbeiteten Feldbereichs 51 verläuft die Bearbeitungsgrenze 53, anders als in der Figur 3, schräg zur Fahrtrichtung F. Als Folge daraus werden die Rechkreisel unabhängig voneinander angehoben. Zu sehen ist, dass an der Position P₃ zunächst der linke vordere Rechkreisel angehoben wird, da dieser den bereits bearbeiteten Feldbereich 51 erreicht hat. Der dazu gegenüberliegende, rechte Rechkreisel wird erst später angehoben, wenn er die Bearbeitungsgrenze 53 ebenfalls reicht. Unabhängig davon werden beim hinteren Paar ebenfalls zunächst der linke Rechkreisel und dann der rechte Rechkreisel angehoben. Abhängig von der Konfiguration des Schwaders 3 und dem Verlauf der Bearbeitungsgrenze 53 (wie in der Figur 4 dargestellt) werden zunächst die beiden linken Rechkreisel angehoben und dann die beiden Rechten. Verläuft die Bearbeitungsgrenze 53 jedoch weniger schräg zur Fahrtrichtung F, so werden zunächst das vordere Paar und dann das hintere Paar angehoben. Verläuft die Bearbeitungsgrenze 53 in umgekehrter Orientierung schräg zu Fahrtrichtung, so werden von einem Paar zunächst der rechte Rechkreisel und dann der linke Rechkreisel angehoben.

Anschließend wendet die landwirtschaftliche Maschine in die Position P₄, wobei die Rechkreisel aus dem bereits bearbeiteten Feldbereich 51 in den noch zu bearbeitenden Feldbereich 52 einfahren.

Zu sehen ist, dass durch den schrägen Verlauf der Bearbeitungsgrenze 53 zunächst der linke vordere Rechkreisel wieder abgesenkt wird und als erstes mit der Bearbeitung beginnt. Entsprechend versetzt wird dann der vordere rechte Rechkreisel beim Erreichen der Bearbeitungsgrenz 53 später abgesenkt. Wie zuvor in Bezug auf die Position P₃ erläutert, wird das hintere Paar Rechkreisel ebenfalls abgesenkt, zunächst links und dann rechts. Dies geschieht je nach Schräge der Bearbeitungsgrenze 53 entweder nach dem vorderen Paar oder entsprechend versetzt.

Die Berechnung, wann die Rechkreisel jeweils automatisch angehoben oder abgesenkt werden, erfolgt entsprechend den zuvor beschriebenen Verfahrensschritten 113 und 114 auf Basis von Positionsangaben der Rechkreisel.

Anschließend wird der noch zu bearbeitenden Feldbereich 52 in parallelen Feldgassen bearbeitet, wobei im außenliegenden Feldbereich gewendet wird. Dabei werden dann die Rechkreisel jeweils automatisch und unabhängig voneinander auf Basis ihrer Positionen zum bereits bearbeiteten Feldbereich 51 angehoben bzw. abgesenkt.

In der Figur 5 ist ein weiteres erfindungsgemäßes Ausführungsbeispiel der landwirtschaftlichen Maschine 201 in einer Draufsicht dargestellt. Zu sehen ist, dass hier anstelle eines Schwaders eine Arbeitsgerätekombination in Form eines Mähwerks 203 am Zugfahrzeug angeordnet ist. Das Zugfahrzeug 2 weist die zuvor in Bezug auf die Fig. 1A - 1B beschriebenen Merkmale auf. Die zuvor in Bezug auf den Schwader 3 in den Figuren 1A - 4 beschriebenen Merkmale gelten sinngemäß auch für das Mähwerk 203.

Zu sehen ist, dass an dem Zugfahrzeug 2 als Arbeitsgeräte ein Frontmähwerk 233a und zwei Seitenmähwerke 233b, 233c angeordnet sind (Butterfly-Anordnung). Innerhalb der Arbeitsbreite A mäht das Frontmähwerk 233a den mittleren Bereich und die Seitenmähwerke 233b, 233c die beiden äußeren Bereiche, rechts und links. Ferner ist zu sehen, dass das Frontmähwerk 233a und die beiden Seitenmähwerke 233b, 233c jeweils einen Mähbalken mit mehreren Mähscheiben bilden.

Der Tragrahmen wird hier durch mehrere separate Einheiten 231a, 231b gebildet, die über das Zugfahrzeug 2 miteinander verbunden sind.

Weiter ist zu sehen, dass die Front- und Seitenmähwerke 233a - 233c über Arme 232a - 232d mit dem Tragrahmen 231a, 231b verbunden sind. Die Arme 232a - 232d können jeweils unabhängig voneinander angehoben und abgesenkt werden. Dazu werden hydraulische oder elektrische Steuersignale vom Zugfahrzeug 2 an entsprechende Aktuatoren, die an den Armen 232a - 232d angebracht sind, übertragen werden, wodurch die Front- und Seitenmähwerke 233a - 233d in die Vorgewendestellung oder in den Eingriff mit dem Erntegut geschwenkt werden können (Mähposition).Das zuvor in Bezug auf die Fig. 2 beschriebene Verfahren kann sinngemäß auch bei dem landwirtschaftlichen Maschine 201 der Fig. 5 eingesetzt werden, so dass die landwirtschaftlichen Nutzflächen 4, 5 der Fig. 3-4 entsprechend bearbeitet werden können.

Dadurch, dass bei dem Verfahren 100 nach den Figuren 2-4 beim Zusammenrechen bzw. Mähen mit dem Navigationssystem 21 laufend Positionsdaten des Schwaders 3 bzw. des Mähwerks 203 erfasst werden und daraus der bereits bearbeitete Feldbereich 41,51 ermittelt und aufgezeichnet wird und dann die Rechkreisel 33a - 33d bzw. die Front- und Seitenmähwerke 233a - 233c auf Basis ihrer Positionen gegenüber dem bereits bearbeiteten Feldbereich unabhängig voneinander automatisch angehoben bzw. abgesenkt werden, wird ein bereits im bearbeiteten Feldbereich 41, 51 abgelegter Schwad nicht überrecht und beeinträchtigt. Darüber hinaus werden die Rechkreisel 33a - 33d bzw. die Front- und Seitenmähwerke 233a - 233c weder zu früh noch zu spät angehoben, sodass das Erntegut besonders präzise und mit möglichst wenig Verlust zusammengerecht bzw. abgemäht wird. Folglich ist das Verfahren besonders effizient.

Dies gilt entsprechend für die Maschinensteuerung 22 bzw. die landwirtschaftliche Maschine 1, 201 der Figuren 1A-1B bzw. 5.

Es versteht sich, dass in den zuvor beschriebenen Ausführungsbeispielen genannte Merkmale nicht auf diese speziellen Kombinationen beschränkt sind und auch Einzeln oder in beliebigen anderen Kombinationen möglich sind.

## Patentansprüche

1. Verfahren (100) zum Betreiben einer landwirtschaftliche Maschine (1, 201) auf einer landwirtschaftlichen Nutzfläche (4, 5) mit einem Zugfahrzeug (2) und einer mit dem Zugfahrzeug (2) verbundenden Arbeitsgerätekombination (3, 203) in Form eines Mähwerks und/oder Schwaders, wobei das Erntegut mit mehreren Arbeitsgeräten (33a - 33d, 233a - 233c) bearbeitet wird, die von einem Tragrahmen (31, 231a-231b) quer zur Fahrtrichtung (F) der Arbeitsgerätekombination (3, 203) abstehend angeordnet sind, wobei die Arbeitsgeräte (33a - 33d, 233a - 233c) jeweils unabhängig voneinander angehoben und abgesenkt werden können, um sie entweder in eine Vorgewendestellung oder in Eingriff mit dem Erntegut zu bringen,
**dadurch gekennzeichnet, dass**
beim Bearbeiten mit einem vorzugsweise satellitengestützten Navigationssystem (21) laufend Positionsdaten der Arbeitsgerätekombination (3, 203) erfasst werden (111) und daraus wenigstens ein bereits bearbeiteter Feldbereich (41, 51) ermittelt und aufgezeichnet wird (112), und
dass die Arbeitsgeräte (33a - 33d, 233a - 233c) jeweils unabhängig voneinander auf Basis ihrer Positionen beim Wiederreichen des wenigstens einen bereits bearbeiteten Feldbereichs (41, 51) automatisch angehoben werden (113),
und/oder
dass die Arbeitsgeräte (33a - 33d, 233a - 233c) jeweils unabhängig voneinander auf Basis ihrer Positionen beim Einfahren aus dem wenigstens einen bereits bearbeiteten Feldbereich (41, 51) in einen noch zu bearbeitenden Feldbereich (42, 52) automatisch abgesenkt werden (114).

2. Verfahren (100) nach Anspruch 1, wobei zur Ermittlung des wenigstens einen bearbeiteten Feldbereichs (41, 51) aus den laufend erfassten Positionsdaten des Navigationssystems (21) ein zurückgelegter Fahrtweg (S) der Arbeitsgerätekombination (3, 203) bestimmt wird.

3. Verfahren (100) nach Anspruch 2, wobei vor dem Bearbeiten eine Arbeitsbreite (A) vorzugsweise von einer Bedienperson festgelegt wird, auf deren Basis ein Abstand von wenigstens einem der Arbeitsgeräte (33a - 33d, 233a - 233c) gegenüber dem Tragrahmen (31) eingestellt wird, wobei aus der Arbeitsbreite (A) und dem zurückgelegten Fahrtweg (S) der wenigstens eine bereits bearbeitete Feldbereich (41, 51) ermittelt wird.

4. Verfahren (100) nach einem der Ansprüche 1 - 3, wobei beim Bearbeiten zunächst ein außenliegender Feldbereich bearbeitet wird, der den bereits bearbeiteten Feldbereich bildet (41, 51) und anschließend ein vom außenliegenden Feldbereich wenigstens teilweise umschlossener innerer Feldbereich bearbeitet wird, der den noch zu bearbeitenden Feldbereich (42, 52) bildet.

5. Verfahren (100) nach einem der Ansprüche 1 - 4, wobei beim Erreichen einer zur Fahrtrichtung (F) senkrechten Bearbeitungsgrenze (43) zwei paarweise gegenüberliegend am Tragrahmen (31) angeordnete Arbeitsgeräte (33a, 33b / 33c, 33d / 233b, 233c) gleichzeitig automatisch angehoben oder abgesenkt werden.

6. Verfahren (100) nach einem der Ansprüche 1 - 5, wobei beim Erreichen einer zur Fahrtrichtung (F) schrägen Bearbeitungsgrenze (53) zwei paarweise gegenüberliegend am Tragrahmen (31) angeordnete Arbeitsgeräte (33a, 33b / 33c, 33d / 233b, 233c) auf Basis einer Berechnung von Positionsangaben der Arbeitsgeräte (33a, 33b / 33c, 33d / 233b, 233c) gegenüber der Bearbeitungsgrenze (53) automatisch angehoben oder abgesenkt werden, insbesondere wobei zunächst das zur Bearbeitungsgrenze (53) näher liegende Arbeitsgerät (33a, 33c, 233b) angehoben oder abgesenkt wird und danach das zur Bearbeitungsgrenze (53) entfernter liegende Arbeitsgerät (33b, 33d, 233c).

7. Verfahren (100) nach einem der Ansprüche 1 - 6, wobei das Erntegut mit wenigstens vier als Rechkreisel ausgebildeten Arbeitsgeräten (33a - 33d) zusammengerecht wird, die paarweise gegenüberliegend am Tragrahmen (31) angeordnet sind, und wobei ein erstes Paar Rechkreisel (33a, 33b) gegenüber einem zweiten Paar Rechkreisel (33c, 33d) in Fahrtrichtung (F) weiter vorne am Tragrahmen (31) angeordnete ist, vorzugsweise wobei das erste Paar Rechkreisel (33a, 33b) vom Tragrahmen (31) breiter absteht als das zweite Paar Rechkreisel (33c, 33d).

8. Verfahren (100) nach Anspruch 7, wobei beim Wiedererreichen des wenigstens einen bereits bearbeiteten Feldbereichs (41) zunächst wenigstens ein Rechkreisel (33a, 33b) des ersten Paars und dann wenigstens ein Rechkreisel (33c, 33d) des zweiten Paars angehoben werden und/oder wobei beim Einfahren in den noch zu bearbeitenden Feldbereich (42) zunächst wenigstens ein Rechkreisel (33a, 33b) des ersten Paars und dann wenigstens ein Rechkreisel (33c, 33d) des zweiten Paars abgesenkt werden.

9. Verfahren (100) nach einem der Ansprüche 1 - 8, wobei beim Wiedererreichen des bereits bearbeiteten Feldbereich (41, 51) eine erste Distanz berücksichtigt, wie weit die Arbeitsgeräte jeweils in den bereits bearbeiteten Feldbereich (41, 51) einfahren können, bevor sie angehoben werden.

10. Verfahren (100) nach einem der Ansprüche 1 - 9, wobei beim Einfahren aus dem wenigstens einen bereits bearbeiteten Feldbereich (41, 51) in den noch zu bearbeitenden Feldbereich (42, 52) eine zweite Distanz berücksichtigt, wie weit sich die Arbeitsgeräte (33a - 33d, 233a - 233c) jeweils noch in dem bereits bearbeiteten Feldbereich (41, 52) befinden dürfen und dabei schon abgesenkt werden.

11. Verfahren (100) nach einem der Ansprüche 1 - 10, wobei bei der Ermittlung und Aufzeichnung des bearbeiteten Feldbereichs (41, 51) und/oder beim Anheben und/oder Absenken der Arbeitsgeräte (33a - 33d, 233a - 233c) eine Position der Arbeitsgerätekombination (3) und/oder Positionen der jeweiligen Arbeitsgeräte (33a - 33d) gegenüber dem Navigationssystems (21) berücksichtigt werden, vorzugsweise gegenüber einer Antenne des Navigationssystems (21).

12. Verfahren (100) nach einem der Ansprüche 1 - 11, wobei das Erntegut mit zwei, vier oder sechs paarweise am Tragrahmen (31) gegenüberliegend angeordneten Arbeitsgeräte (33a - 33d, 233a - 233c) bearbeitet wird, die jeweils unabhängig voneinander angehoben und abgesenkt werden können.

13. Landwirtschaftliche Maschine (1) mit einem Zugfahrzeug (2) und einer mit dem Zugfahrzeug (2) verbundenen Arbeitsgerätekombination (3) in Form eines Mähwerks oder Schwaders zur Bearbeitung von Erntegut auf einer landwirtschaftlichen Nutzfläche (4, 5), mit einem Tragrahmen (31), mit mehreren quer zur Fahrtrichtung (F) abstehende angeordneten Arbeitsgeräten (33a - 33d, 233a - 233c), die jeweils unabhängig voneinander anhebbar und absenkbar sind, um sie entweder in eine Vorgewendestellung oder in Eingriff mit dem Erntegut zu bringen, mit einer Maschinensteuerung (22) zur Steuerung des Anhebens und des Absenkens der Arbeitsgeräte (33a - 33d, 233a - 233c) und mit einem vorzugsweise satellitengestützten Navigationssystem (22) zur Erfassung von Positionsdaten der Arbeitsgerätekombination (3),
**dadurch gekennzeichnet, dass**
die Maschinensteuerung (22) dazu ausgebildet ist,
beim Bearbeiten die Positionsdaten des Navigationssystems (21) laufend zu erfassen und daraus wenigstens einen bereits bearbeiteten Feldbereich (41, 51) zu ermitteln und aufzuzeichnen, und
das Anheben und Absenken der Arbeitsgeräte (33a - 33d, 233a - 233c) derart zu steuern,
dass die Arbeitsgeräte (33a - 33d, 233a - 233c) jeweils unabhängig voneinander auf Basis ihrer Positionen beim Wiederreichen des wenigstens einen bereits bearbeiteten Feldbereichs (41, 51) automatisch angehoben werden,
und/oder
dass die Arbeitsgeräte (33a - 33d, 233a - 233c) jeweils unabhängig voneinander auf Basis ihrer Positionen beim Einfahren aus dem wenigstens einen bereits bearbeiteten Feldbereich (41, 51) in einen noch zu bearbeitenden Feldbereich (42, 52) automatisch abgesenkt werden.

14. Maschinensteuerung (22) für eine landwirtschaftliche Maschine (1) mit einem Zugfahrzeug (2) und einer mit dem Zugfahrzeug (2) verbundenen Arbeitsgerätekombination (3) in Form eines Mähwerks oder Schwaders (3) mit mehreren Arbeitsgeräten (33a - 33d, 233a - 233c) zum Bearbeiten von Erntegut auf einer landwirtschaftlichen Nutzfläche (4, 5),
**dadurch gekennzeichnet, dass**
die Maschinensteuerung (22) dazu ausgebildet ist,
beim Bearbeiten Positionsdaten eines vorzugsweise satellitengestützten Navigationssystems (21) laufend zu erfassen und daraus wenigstens einen bereits bearbeiteten Feldbereich (41, 51) zu ermitteln und aufzuzeichnen, und
ein Anheben und Absenken der Arbeitsgeräte (33a - 33d, 233a - 233c) derart zu steuern,
dass die Arbeitsgeräte (33a - 33d, 233a - 233c) jeweils unabhängig voneinander auf Basis ihrer Positionen beim Wiederreichen des wenigstens einen bereits bearbeiteten Feldbereichs (41, 51) automatisch angehoben werden, und/oder
dass die Arbeitsgeräte (33a - 33d, 233a - 233c) jeweils unabhängig voneinander auf Basis ihrer Positionen beim Einfahren aus dem wenigstens einen bereits bearbeiteten Feldbereich (41, 51) in einen noch zu bearbeitenden Feldbereich (42, 52) automatisch abgesenkt werden.

## Claims

1. Method (100) for operating an agricultural machine (1, 201) on an agricultural useful area (4, 5) with a tractor vehicle (2) and an implement combination (3, 203) connected to the tractor vehicle (2) in the form of a mower and/or swather, the crop being processed with a plurality of implements (33a - 33d, 233a - 233c) arranged to project from a support frame (31, 231a-231b) transversely to the direction of travel (F) of the implement combination (3, 203), the implements (33a-33d, 233a-233c) each being raised and lowered independently of one another to either bring them into a headland position or into engagement with the crop,
**characterized in that**
when working with a preferably satellite-supported navigation system (21), position data of the implement combination (3, 203) are continuously recorded (111) and at least one field area (41, 51) already worked is determined therefrom and recorded (112), and
that the implements (33a - 33d, 233a - 233c) are each automatically raised (113) independently of one another on the basis of their positions when the at least one field area already worked (41, 51) is reached again,
and/or
that the implements (33a - 33d, 233a - 233c) are each automatically lowered (114) independently of one another on the basis of their positions when entering from the at least one field area (41, 51) already worked into a field area (42, 52) still to be worked.

2. Method (100) according to claim 1, wherein a covered travel distance (S) of the implement combination (3, 203) is determined from the continuously recorded position data of the navigation system (21) to determine the at least one worked field area (41, 51).

3. Method (100) according to claim 2, wherein prior to working a working width (A) is preferably defined by an operator, on the basis of which a distance of at least one of the implements (33a - 33d, 233a - 233c) from the support frame (31) is set, wherein the at least one field area (41, 51) already worked is determined from the working width (A) and the travel distance (S) covered.

4. Method (100) according to one of claims 1 - 3, wherein during working an outer field area which forms the already worked field area (41, 51) is worked first and then an inner field area is worked, which is at least partially enclosed by the outer field area and which forms the field area (42, 52) still to be worked.

5. Method (100) according to one of claims 1 - 4, wherein when a working limit (43) perpendicular to the direction of travel (F) is reached, two implements (33a, 33b / 33c, 33d / 233b, 233c) arranged opposite in pairs on the support frame (31) are automatically raised or lowered simultaneously.

6. Method (100) according to one of claims 1 - 5, wherein when a working limit (53) inclined relative to the direction of travel (F) is reached, two implements (33a, 33b / 33c, 33d / 233b, 233c) arranged opposite in pairs on the support frame (31) are automatically raised or lowered with respect to the working limit (53) on the basis of a calculation of position specifications of the implements (33a, 33b / 33c, 33d / 233b, 233c), in particular wherein first the implement (33a, 33c, 233b) closer to the working limit (53) is raised or lowered and then the implement (33b, 33d, 233c) further away from the working limit (53) is raised or lowered.

7. Method (100) according to one of claims 1 - 6, wherein the crop is raked together with at least four implements (33a - 33d) constructed as rotary rakes, which are arranged in pairs opposite one another on the support frame (31), and wherein a first pair of rotary rakes (33a, 33b) is arranged further forward on the support frame (31) relative to a second pair of rotary rakes (33c, 33d) in the direction of travel (F), preferably wherein the first pair of rotary rakes (33a, 33b) projects from the support frame (31) wider than the second pair of rotary rakes (33c, 33d).

8. Method (100) according to claim 7, wherein when the at least one field area (41) already worked is reached again, at least one rotary rake (33a, 33b) of the first pair is first raised and then at least one rotary rake (33c, 33d) of the second pair is raised and/or wherein at least one rotary rake (33a, 33b) of the first pair is first lowered and then at least one rotary rake (33c, 33d) of the second pair is lowered when moving into the field area (42) still to be worked.

9. Method (100) according to one of claims 1 - 8, wherein when the already worked field area (41, 51) is reached again a first distance takes into account how far the implements can each move into the already worked field area (41, 51) before they are raised.

10. Method (100) according to one of claims 1 - 9, wherein when moving from the at least one field area (41, 51) already worked into the field area (42, 52) still to be worked a second distance takes into account how far the implements (33a - 33d, 233a - 233c) may still be in the field area (41, 52) already worked and are already lowered.

11. Method (100) according to one of claims 1 - 10, wherein a position of the implement combination (3) and/or positions of the respective implements (33a - 33d) relative to the navigation system (21), preferably relative to an antenna of the navigation system (21), are taken into account when determining and recording the worked field area (41, 51) and/or when raising and/or lowering the implements (33a - 33d, 233a - 233c).

12. Method (100) according to one of claims 1 - 11, wherein the crop is processed with two, four or six implements (33a - 33d, 233a - 233c) arranged opposite one another in pairs on the support frame (31), each of which can be raised and lowered independently of one another.

13. Agricultural machine (1) with a tractor vehicle (2) and an implement combination (3) connected to the tractor vehicle (2) in the form of a mower or swather for processing crop on an agricultural useful area (4, 5), with a support frame (31), with a plurality of implements (33a - 33d, 233a - 233c) arranged to project transversely to the direction of travel (F), which can be raised and lowered independently of one another in order to bring them either into a headland position or into engagement with the crop, with a machine control (22) for controlling the raising and lowering of the implements (33a - 33d, 233a - 233c) and with a preferably satellite-supported navigation system (22) for recording position data of the implement combination (3),
**characterized in that**
the machine control (22) is designed
to continuously record the position data of the navigation system (21) during working and to determine and record at least one already worked field area (41, 51) therefrom, and
to control the lifting and lowering of the implements (33a - 33d, 233a - 233c) in such a way
that the implements (33a - 33d, 233a - 233c) are automatically raised independently of one another on the basis of their positions when the at least one field area (41, 51) already worked is reached again,
and/or
that the implements (33a - 33d, 233a - 233c) are automatically lowered independently of one another on the basis of their positions when moving from the at least one field area already worked (41, 51) into a field area (42, 52) still to be worked.

14. Machine control (22) for an agricultural machine (1) with a tractor vehicle (2) and an implement combination (3) connected to the tractor vehicle (2) in the form of a mower or swather (3) with a plurality of implements (33a - 33d, 233a - 233c) for processing crop on an agricultural useful area (4, 5),
**characterized in that**
the machine control (22) is designed
to continuously record position data of a preferably satellite-supported navigation system (21) during working and to determine and record at least one already worked field area (41, 51) therefrom, and
to control a lifting and lowering of the implements (33a - 33d, 233a - 233c) in such a way
that the implements (33a - 33d, 233a - 233c) are automatically raised independently of one another on the basis of their positions when the at least one field area (41, 51) already worked is reached again,
and/or
that the implements (33a - 33d, 233a - 233c) are automatically lowered independently of one another on the basis of their positions when moving from the at least one field area (41, 51) already worked into a field area (42, 52) still to be worked.

## Revendications

1. Procédé (100) pour assurer le fonctionnement d'une machine agricole (1, 201) sur une surface utile agricole (4, 5), à l'aide d'un véhicule tracteur (2) et d'une combinaison d'outillages de travail (3, 203) reliée au véhicule tracteur (2) et se présentant sous la forme d'un dispositif de fauchage et/ou d'une andaineuse, le produit de récolte étant travaillé avec plusieurs outillages de travail (33a-33d, 233a-233c), qui sont agencés de manière à faire saillie d'un châssis porteur (31, 231a-231b), transversalement à la direction de marche (F) de la combinaison d'outillages de travail (3, 203), les outillages de travail (33a-33d, 233a-233c) pouvant être soulevés et abaissés respectivement de manière indépendante les uns des autres, pour les amener dans une position de tournière de bout de champ ou en prise avec le produit de récolte,
**caractérisé**
**en ce que** lors de l'opération de travail, on relève en continu (111), avec un système de navigation (21) de préférence assisté par satellite, des données de position de la combinaison d'outillages de travail (3, 203), et à partir de là on détermine et enregistre (112) au moins une zone de champ (41, 51) ayant déjà été travaillée,
**en ce que** les outillages de travail (33a-33d, 233a-233c) sont automatiquement soulevés (113), respectivement de manière indépendante les uns des autres, en se basant sur leurs positions, lorsqu'ils atteignent à nouveau ladite au moins une zone de champ (41, 51) ayant déjà été travaillée,
et/ou
**en ce que** les outillages de travail (33a-33d, 233a-233c) sont automatiquement abaissés (114), respectivement de manière indépendante les uns des autres, en se basant sur leurs positions, lorsqu'à partir de ladite au moins une zone de champ (41, 51) ayant déjà été travaillée, ils rentrent dans une zone de champ (42, 52) devant encore être travaillée.

2. Procédé (100) selon la revendication 1, d'après lequel pour la détermination de ladite au moins une zone de champ (41, 51) ayant été travaillée, on détermine à partir des données de position relevées en continu du système de navigation (21), un parcours de circulation (S) ayant été effectué par la combinaison d'outillages de travail (3, 203).

3. Procédé (100) selon la revendication 2, d'après lequel avant l'opération de travail, on, de préférence une personne de service, définit une largeur de travail (A) sur la base de laquelle est réglée une distance d'au moins l'un des outillages de travail (33a-33d, 233a-233c) par rapport au châssis de support (31), ladite au moins une zone de champ (41, 51) ayant été travaillée étant déterminée à partir de la largeur de travail (A) et du parcours de circulation (S) ayant été effectué.

4. Procédé (100) selon l'une des revendications 1-3, d'après lequel lors de l'opération de travail, on travaille tout d'abord une zone de champ située sur l'extérieur, qui forme la zone de champ (41, 51) ayant déjà été travaillée, et on travaille ensuite une zone de champ intérieure, qui est entourée, au moins partiellement, par la zone de champ située sur l'extérieur, et qui forme la zone de champ (42, 52) devant encore être travaillée.

5. Procédé (100) selon l'une des revendications 1-4, d'après lequel lorsqu'on atteint une limite de travail (43) perpendiculaire à la direction de marche (F), deux outillages de travail (33a, 33b/33c-33d, 233b/233c) agencés de manière opposée par paires sur le châssis porteur (31), sont soulevés ou abaissés automatiquement de manière simultanée.

6. Procédé (100) selon l'une des revendications 1-5, d'après lequel lorsqu'on atteint une limite de travail (53) oblique par rapport à la direction de marche (F), deux outillages de travail (33a, 33b/33c-33d, 233b/233c) agencés de manière opposée par paires sur le châssis porteur (31), sont soulevés ou abaissés automatiquement sur la base d'un calcul d'indications de position des outillages de travail (33a, 33b/33c-33d, 233b/233c) par rapport à la limite de travail (53), notamment d'après lequel c'est tout d'abord l'outillage de travail (33a, 33c, 233b) situé le plus près de la limite de travail (53), qui est soulevé ou abaissé, et ensuite l'outillage de travail (33b, 33d, 233c) plus éloigné de la limite de travail (53).

7. Procédé (100) selon l'une des revendications 1-6, d'après lequel le produit de récolte est rassemblé à l'aide d'au moins quatre outillages de travail (33a-33d) se présentant sous la forme de toupies à râteaux, qui sont agencés de manière opposée par paires sur le châssis porteur (31), et d'après lequel une première paire de toupies à râteaux (33a, 33b) est agencée plus à l'avant sur le châssis porteur (31) par rapport à une deuxième paire de toupies à râteaux (33c, 33d), en se référant à la direction de marche (F), et de préférence d'après lequel la première paire de toupies à râteaux (33a, 33b) est déportée de manière plus large du châssis porteur (31) que la deuxième paire de toupies à râteaux (33c, 33d).

8. Procédé (100) selon la revendication 7, d'après lequel lors du retour à ladite au moins une zone de champ (41) déjà travaillée, ce sont tout d'abord au moins une toupie à râteaux (33a, 33b) de la première paire et ensuite au moins une toupie à râteaux (33c, 33d) de la deuxième paire, qui sont soulevées, et/ou d'après lequel lors de l'entrée dans la zone de champ (42) devant encore être travaillée, ce sont tout d'abord au moins une toupie à râteaux (33a, 33b) de la première paire et ensuite au moins une toupie à râteaux (33c, 33d) de la deuxième paire, qui sont abaissées.

9. Procédé (100) selon l'une des revendications 1-8, d'après lequel lors du retour à la zone de champ (41, 51) déjà travaillée, une première distance tient compte de combien les outillages de travail peuvent respectivement entrer dans la zone de champ (41, 51) déjà travaillée, avant d'être soulevés.

10. Procédé (100) selon l'une des revendications 1-9, d'après lequel lors de l'entrée, à partir de ladite au moins une zone de champ (41, 51) déjà travaillée, dans la zone de champ (42, 52) devant encore être travaillée, une deuxième distance tient compte de combien les outillages de travail (33a-33d, 233a-233c) peuvent encore se trouver dans la zone de champ (41, 51) déjà travaillée tout en pouvant déjà être abaissés.

11. Procédé (100) selon l'une des revendications 1-10, d'après lequel lors de la détermination et de l'enregistrement de la zone de champ (41, 51) déjà travaillée, et/ou lors du soulèvement et/ou de l'abaissement des outillages de travail (33a-33d, 233a-233c), on tient compte d'une position de la combinaison d'outillages de travail (3) et/ou de positions des outillages de travail (33a-33d) par rapport au système de navigation (21), de préférence par rapport à une antenne du système de navigation (21).

12. Procédé (100) selon l'une des revendications 1-11, d'après lequel le produit de récolte est travaillé à l'aide de deux, quatre ou six outillages de travail (33a-33d, 233a-233c), qui sont agencés de manière opposée par paires, sur le châssis porteur (31), et qui peuvent être soulevés et abaissés respectivement de manière indépendante les uns des autres.

13. Machine agricole (1) comprenant un véhicule tracteur (2) et une combinaison d'outillages de travail (3) reliée au véhicule tracteur (2) et se présentant sous la forme d'un dispositif de fauchage et/ou d'une andaineuse, pour travailler un produit de récolte sur une surface agricole utile (4, 5), un châssis porteur (31) avec plusieurs outillages de travail (33a-33d, 233a-233c), qui sont agencés de manière à en faire saillie transversalement à la direction de marche (F), et qui peuvent être soulevés et abaissés respectivement de manière indépendante les uns des autres, pour les amener dans une position de tournière de bout de champ ou en prise avec le produit de récolte, et comprenant également une commande de machine (22) pour commander le soulèvement et l'abaissement des outillages de travail (33a-33d, 233a-233c), et un système de navigation (21), de préférence assisté par satellite, pour relever des données de position de la combinaison d'outillages de travail (3),
**caractérisé**
**en ce que** la commande de machine (22) est conçue pour relever en continu, lors de l'opération de travail, les données de position du système de navigation (21), et à partir de là, déterminer et enregistrer au moins une zone de champ (41, 51) ayant déjà été travaillée, et commander le soulèvement et l'abaissement des outillages de travail (33a-33d, 233a-233c) de manière telle,
que les outillages de travail (33a-33d, 233a-233c) soient automatiquement soulevés, respectivement de manière indépendante les uns des autres, en se basant sur leurs positions, lorsqu'ils atteignent à nouveau ladite au moins une zone de champ (41, 51) ayant déjà été travaillée,
et/ou
que les outillages de travail (33a-33d, 233a-233c) soient automatiquement abaissés, respectivement de manière indépendante les uns des autres, en se basant sur leurs positions, lorsqu'à partir de ladite au moins une zone de champ (41, 51) ayant déjà été travaillée, ils rentrent dans une zone de champ (42, 52) devant encore être travaillée.

14. Commande de machine (22) pour une machine agricole (1) comprenant un véhicule tracteur (2) et une combinaison d'outillages de travail (3) reliée au véhicule tracteur (2) et se présentant sous la forme d'un dispositif de fauchage et/ou d'une andaineuse (3), avec plusieurs outillages de travail (33a-33d, 233a-233c) pour travailler un produit de récolte sur une surface agricole utile (4, 5),
**caractérisée en ce que**
la commande de machine (22) est conçue pour relever en continu, lors d'une opération de travail, des données de position d'un système de navigation (21) de préférence assisté par satellite, et à partir de là, déterminer et enregistrer au moins une zone de champ (41, 51) ayant déjà été travaillée, et
commander un soulèvement et un abaissement des outillages de travail (33a-33d, 233a-233c) de manière telle,
que les outillages de travail (33a-33d, 233a-233c) soient automatiquement soulevés, respectivement de manière indépendante les uns des autres, en se basant sur leurs positions, lorsqu'ils atteignent à nouveau ladite au moins une zone de champ (41, 51) ayant déjà été travaillée,
et/ou
que les outillages de travail (33a-33d, 233a-233c) soient automatiquement abaissés, respectivement de manière indépendante les uns des autres, en se basant sur leurs positions, lorsqu'à partir de ladite au moins une zone de champ (41, 51) ayant déjà été travaillée, ils rentrent dans une zone de champ (42, 52) devant encore être travaillée.
